# EUROPEAN PATENT APPLICATION

(11) **EP 1 517 325 A2**
(43) Date of publication of application: **23.03.2005**
(21) Application number: 04255499.8
(22) Date of filing: 10.09.2004
(51) Int. Cl.: G11B 20/00

(54) **Optical disc apparatus and hybrid optical disc**

(30) Priority: 10.09.2003 JP 2003318982
(71) Applicant: Ricoh Company, Ltd., Yokohama-shi, Kanagawa 222-8530 (JP)
(72) Inventor: Watanabe, Takeshi c/o Ricoh Co Ltd, Tokyo 143-8555 (JP)
(74) Representative: Mounteney, Simon James

(57) **Abstract**

An optical disc apparatus configured to prevent unauthorized use of hybrid optical discs by determining by a prevention means whether a hybrid optical disc is legitimate not only during information reading but also during a recording process. The prevention means includes a reading process determination means for examining whether the hybrid optical disc is legitimate during a reading process of information recorded in the ROM area. The determination means is also configured to determine whether the hybrid optical disc is legitimate during the process of recording information. In another aspect, the prevention means includes a read information determination means and a record information determination means utilizing information that is retrievable when information recorded in advance in the ROM area is read and when information is recorded in the recordable area, respectively, so as to be able to determine more credibly that a hybrid optical disc is legitimate, for example, if the result of determination on the hybrid optical disc obtained from both the read information determination means and the record information determination means is found legitimate.

## Description

### FIELD OF THE INVENTION

The invention generally relates to optical disc apparatuses, and more specifically to improved apparatuses capable of preventing unauthorized use of a hybrid optical disc which is provided with a read-only memory area and a recordable area. A related method for the prevention is also disclosed.

This document claims priority to Japanese Patent Application No. 2003-318982, filed with the Japanese Patent Office on September 10, 2003, the entire contents of which are hereby incorporated by reference.

### BACKGROUND OF THE INVENTION

With increasing use of optical recording discs, more contents of information data such as, for example, application software, still pictures and moving images, have been distributed in general by means of recording media typically exemplified by CD-ROM (compact disc read only memory) and other similar media.

The data recorded on the CD media are in the form of digital, which is substantially immune from the deterioration in data quality caused during copying data. Although this offers considerable advantages for data handling such as data copying and transfer on the one hand, there may result in the ease of unauthorized copying or duplication on the other.

Several techniques as prevention measures, therefore, have been proposed to prevent such unauthorized (or illegal) copying of recording discs and the use of illegally copied discs (or media). In addition, it should be noted these techniques have commonly been performed only during data read process.

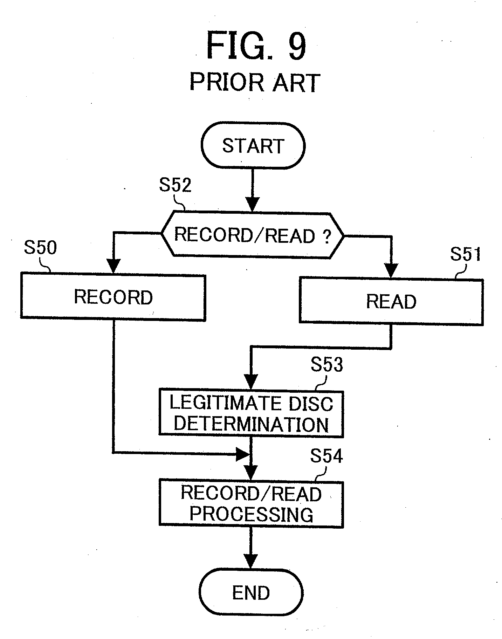

FIG. 9 includes a flowchart illustrating a process flow of previously known prevention techniques.

First in this process it is determined whether a coming operation is a recording (writing) process or a reading (playback) process (S52). In the case of reading process (S51), further determined is whether a hybrid disc is legitimate or not (S53). If the disc is legitimate, reading process is performed (S54).

In contrast, if the process is found to be recording in step S52, no step for the determination is performed and the recording process is performed unconditionally (S54).

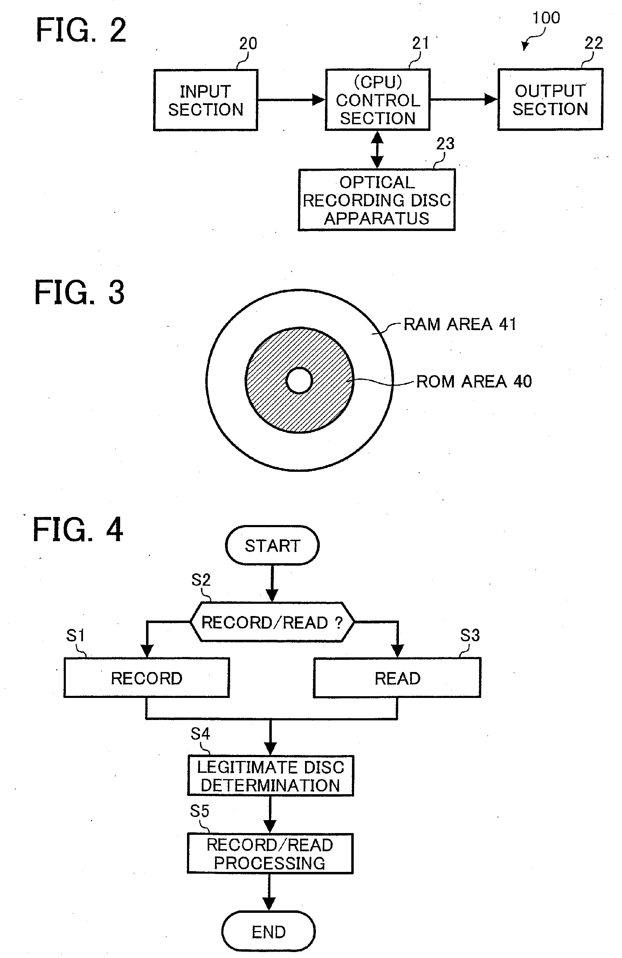

As to compact recording discs, a hybrid optical disc has been recently developed (FIG. 3), which is provided with a read-only memory area (hereinafter referred to as ROM area or portion) and a recordable area (as RAM area). It has been proposed recently for the hybrid optical disc to be distributed or put on the market as a substitute for the CD-ROM carrying contents suitably recorded in advance.

Among such hybrid optical discs, some are formed by stamping its first session as a ROM area and following sessions as a RAM area in order to ensure the compatibility with existing optical discs. This enables even for an optical apparatus, which is incapable of recognizing these hybrid optical discs, to handle these hybrid discs as the discs recorded thereon with multiple sessions, and the compatibility is thus ensured at least in reading process.

As an example of known prevention techniques, Japanese Laid-Open Patent Application No. 2000-3560 discloses a recording medium recorded thereon with original data which are formed from reproduction object data subjected to error correction coding superposed by identification code.

As a further example, Japanese Laid-Open Patent Application No. 2000-156036 discloses several techniques for preventing digital signals having copyright from being copied onto plural recording media and for making unfeasible the reading illegally reproduced digital signals.

Still in addition, Japanese Laid-Open Patent Application No. 2003-123401 teaches the means for solving several known problems, in that the decrease in data recording capacity is resulted from conventionally forming un-reproducible area for protection against copying, and that special detection process is required for the disc provided with a watermark image for the protection because of the difficulty of separating the watermark image from other problems created during bit formation.

In addition, Japanese Patent Publication No. 3465073 discloses the means for credibly reproducing predetermined key information for preventing illegal copying of information recording media.

In contrast to CD-ROM discs, data processing onto the hybrid optical disc can be carried out not only for information reading but also for recording. Therefore, it is desirable from the view point of preventing unauthorized use of recording discs to determine whether the hybrid optical disc presently in use is legitimate not only during data reading but also during recording.

However, in practice so far a drawback has been encountered, in that a hybrid optical disc is examined only during reading process but not during recording process.

In addition, since the above noted techniques disclosed in the applications, '560, '036 and '401, do not include any description on hybrid discs, the techniques described therein are not effective enough to prevent unauthorized use of recording discs especially during information recording.

### SUMMARY

Accordingly, to achieve the foregoing and other objects, and overcome the shortcomings discussed above, an optical disc apparatus is provided having most, if not all, of the advantages and features of similar employed apparatuses, while eliminating many of the aforementioned disadvantages.

An exemplary embodiment of the invention therefore provides an optical disc apparatus capable of credibly preventing unauthorized use of hybrid optical discs by determining whether the disc is legitimate not only during information reading process but also during recording. An exemplary method for implementing the prevention measures is also disclosed.

The following description is a synopsis of only selected features and attributes of the present disclosure. A more complete description thereof is found below in the section entitled "Description of the Preferred Embodiments."

An optical disc apparatus according to an exemplary embodiment includes a prevention means for preventing an unauthorized use of a hybrid optical disc which is provided with a read-only memory (ROM) area and a recordable area.

The prevention means includes a reading process determination means for determining whether the hybrid optical disc is legitimate during a reading process of information recorded in the ROM area. Also, the determination means is configured to determine whether the hybrid optical disc is legitimate during the process of recording information in the hybrid optical disc as well as during the process of reading information.

According to an alternate embodiment, an optical disc apparatus includes a prevention means for preventing an unauthorized use of a hybrid optical disc, which includes
(a) a read information determination means for determining whether the hybrid optical disc is legitimate utilizing information that is retrievable when information recorded in advance in the ROM area is read and
(b) a record information determination means for determining whether the hybrid optical disc is legitimate utilizing information that is retrievable when information is recorded in the recordable area, in which the prevention means is configured to determine more credibly that the hybrid optical disc is legitimate if the result of determination on the hybrid optical disc obtained from both the read information determination means and the record information determination means is found legitimate.

Alternatively, the prevention means is configured to determine, when information recorded in advance in the ROM area is read, that the hybrid optical disc is legitimate if the result of determination on the hybrid optical disc obtained from the read information determination means is found legitimate, while the prevention means is configured to determine, when information is recorded in the recordable area, that the hybrid optical disc is legitimate if the result of determination on the hybrid optical disc obtained from both the read information determination means and the record information determination means are found legitimate.

In addition, the prevention means is alternatively configured to determine, when information recorded in advance in the ROM area is read, that the hybrid optical disc is legitimate if the result of determination on the hybrid optical disc obtained from the read information determination means is found legitimate, while the prevention means is configured to determine, when information is recorded in the recordable area, that the hybrid optical disc is legitimate if the result of determination on the hybrid disc obtained from the record information determination means is found legitimate.

An exemplary method is also disclosed for preventing an unauthorized use of a hybrid optical disc which has a ROM area and a recordable area, including the steps of providing a prevention means comprising a reading process determination means for determining whether the hybrid optical disc is legitimate during a reading process of information recorded in the ROM area; and determining whether the hybrid optical disc is legitimate by the reading process determination means during the process of recording information in the hybrid optical disc as well as during the process of reading information.

According to an alternate embodiment, the exemplary method includes the steps of providing the prevention means, during processes of reading information from, and recoding information into the hybrid optical disc, including
(a) a read information determination means for determining whether the hybrid optical disc is legitimate utilizing information that is retrievable when information recorded in advance in the ROM area is read and
(b) a record information determination means for determining whether the hybrid optical disc is legitimate utilizing information that is retrievable when information is recorded in the recordable area; and
determining that the hybrid optical disc is legitimate if the result of determination on the hybrid optical disc obtained from both the read information determination means and the record information determination means is found legitimate.

Alternatively, the method includes the step of determining by the prevention means, when information recorded in advance in the ROM area is read, that the hybrid optical disc is legitimate if the result of determination on the hybrid optical disc obtained from the read information determination means is found legitimate, while determining, when information is recorded in the recordable area, that the hybrid optical disc is legitimate if the result of determination on the hybrid optical disc obtained from both the read information determination means and the record information determination means is found legitimate.

In addition, the exemplary method alternatively includes the steps of determining by the prevention means, when information recorded in advance in the ROM area is read, that the hybrid optical disc is legitimate if the result of determination on the hybrid optical disc obtained from the read information determination means is found legitimate, while determining, when information is recorded in the recordable area, that the hybrid optical disc is legitimate if the result of determination on the hybrid optical disc obtained from the record information determination means is found legitimate.

Also disclosed are a computer program product for use with a control computer in an optical disc apparatus configured to have access to the hybrid optical disc, including a computer usable medium having computer readable program code means embodied in the medium for causing the steps of preventing an unauthorized use of the hybrid optical disc; and a program storage device readable by a machine, tangibly embodying a program of instructions executable by the machine to perform these steps of preventing unauthorized use.

These and other features and advantages of the invention will be more clearly seen from the following detailed description of the invention which is provided with the accompanying drawings.

### BRIEF DESCRIPTION OF THE DRAWINGS

FIG. 1 is a diagrammatical block diagram illustrating an optical disc apparatus according to one embodiment disclosed herein;
FIG. 2 is a diagrammatical block diagram illustrating an information processing system incorporating the optical disc apparatus of FIG. 1 according to one embodiment of the invention;
FIG. 3 is a top view illustrating a hybrid optical disc of the invention;
FIG. 4 includes a flowchart illustrating a process flow of a prevention technique against unauthorized use of hybrid optical discs according to one embodiment of the present invention;
FIG. 5 is a drawing diagrammatically illustrating the relationship between several pieces of information retrievable from a hybrid optical disc;
FIG. 6 includes a flowchart illustrating a process flow of a prevention technique against unauthorized use of hybrid optical discs according to an alternate embodiment of the present invention;
FIG. 7 includes a flowchart illustrating a process flow of a prevention technique against unauthorized use of hybrid optical discs according to another embodiment of the present invention;
FIG. 8 includes a flowchart illustrating a process flow of a prevention technique against unauthorized use of hybrid optical discs according to still another embodiment of the present invention; and
FIG. 9 includes a flowchart illustrating a process flow of previously known prevention techniques.

### DETAILED DESCRIPTION OF THE INVENTION

In the detailed description which follows in reference to several drawings, specific embodiments of an optical disc apparatus are described, which are particularly useful for data reading and recording for hybrid optical discs.

It is understood, however, that the present disclosure is not limited to these embodiments. For example, the detailed means disclosed herein for utilizing optical hybrid discs may also be adaptable to any form of information reading and recording. Other embodiments will be apparent to those skilled in the art upon reading the following description.

It may be added the description made herein on structural elements, their combination and configuration in the optical disc apparatuses is not intended to be limiting unless specified otherwise. In addition, the term 'hybrid optical disc' is referred to as hybrid disc in some instances.

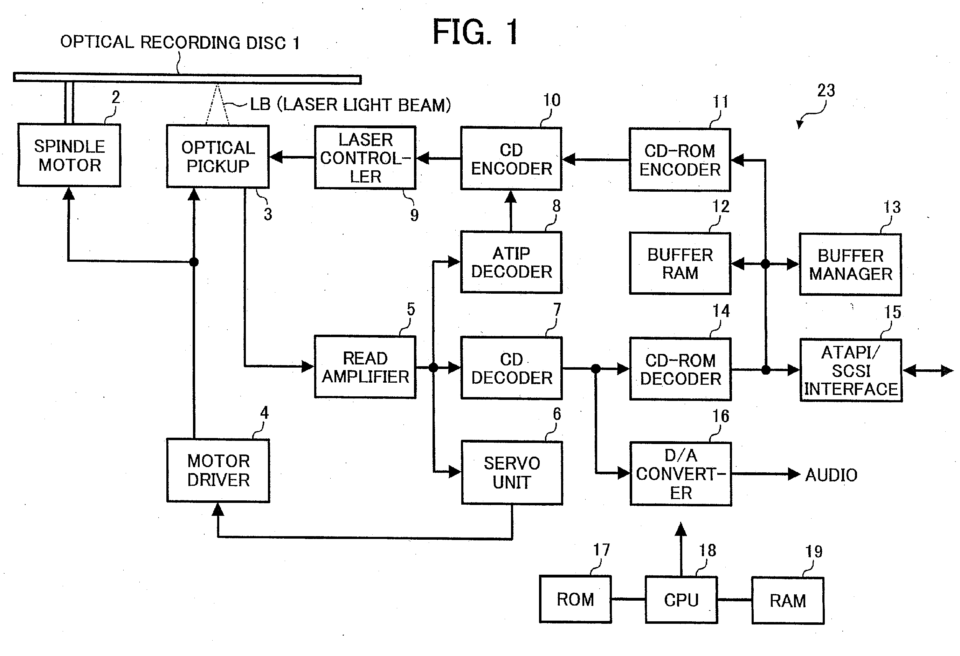

FIG. 1 is a diagrammatical block diagram illustrating an optical disc apparatus according to one embodiment disclosed herein.

Referring to FIG. 1, the optical disc apparatus includes
an optical recording disc 1 of CD or DVD type designed to be rotatably driven by a spindle motor 2;
a motor driver 4 for driving the spindle motor 2, which is subjected to CLV (constant linear velocity) or CAV (constant linear velocity) control, and an actuator (not shown) included in an optical pickup 3;
a servo means 6 for generating signals to servo control;
a read amplifier 5 for processing signals from a light sensitive element (not shown) included in the optical pickup 3;
the optical pickup 3 including a semiconductor laser light source for CD discs (not shown), a further laser light source for DVD discs, an optical system incorporating several optical units such as an objective lens and so on, and the actuator;
a laser controller 9 for controlling a light intensity of the laser sources;
an ATIP decoder 8 for retrieving ATIP (absolute time in pre-groove) information engraved beforehand in the optical recoding disc 1;
a CD encoder circuit 10 for specifying the precise location for data to be recorded;
a CD decoder 7 for performing the eight-to-fourteen modulation (EFM) of binarized RF signals;
a buffer RAM 12 for temporarily storing several data;
a buffer manager 13 for controlling the buffer RAM 12;
an ATAPI/ SCSI interface 15 connected to the buffer RAM 12 and provided with the interfaces such as ATAPI (ATA Packet Interface) and SCSI (small computer system interface);
a DA converter 16 connected to the CD decoder 7 for outputting audio signals;
a CD-ROM encoder 11 for performing the EF-modulation after affixing error correction codes and interleave processing;
a CD-ROM decoder 14 for performing error correction processing and de-interleave processing of the data EF-demodulated; and
a system controller (CPM) 18 including ROM 17 and RAM 17; for assuming the overall control of the optical recording apparatus.

In the next place, operational steps will be detailed utilizing primarily CD discs (CD-ROM/R/RW) also in reference to FIG.1.

Referring to FIG. 1, the direction of data flow is shown by an arrow in the drawing and the interconnections between respective unit blocks, and CPU 18 which assumes the control over the blocks are abbreviated for purposes of simplicity to be represented by one single arrow.

The structure and operation steps of an optical disc drive included in the optical recording apparatus are as follows.

The optical recording disc 1 is rotatably driven by the spindle motor 2. The spindle motor 2 is controlled by servo means 6 to be rotated under the CLV condition, in which the velocity can be altered in incremental steps.

The optical pickup 3 includes the semiconductor laser light source (not shown), the optical system, a focusing actuator, a tracking actuator, the light sensitive element, and a position sensor, so as to illuminate the optical recording disc 1 with laser light beams LB. In addition, the optical pickup 3 is configured to be movable in the sledge direction by means of a seek motor.

The focusing actuator, tracking actuator, and seek motor are altogether controlled by motor driver 4 and servo means 6 servo means 6 based on the signals acquired by the light sensitive element and position sensor such that a beam spot of the laser light LB is incident onto an intended location on the recording disc 1.

During the period of information reading, the signals readout by the optical pickup 3 are amplified and binarized by read amplifier 5, and subsequently input to CD decoder 7. The thus input binarized data are subjected to EF-demodulation in the CD decoder 7.

Incidentally, recorded data, which are previously EF-modulated by eight bits as a bundle or unit, are converted to 14 bits and then affixed with three bits as combination bits to amount to 17 bits. In this case, the combination bits are affixed such that the occurrence of "1" and "0" in the existing data is equal in frequency. This is called "suppression of DC component", which serves to suppress undue variation of the slice level of the readout DC-cut signals.

The thus demodulated data are subjected to the process of de-interleave and error correction.

Subsequently, the data are input to CD-ROM decoder 14 and subjected to further error correction process in order to enhance their credibility. The data, which resulted from twice repeated error correction process, are once instructed by a buffer manager 13 to be stored in the buffer RAM 12, and, upon being completed as sector data, transferred simultaneously to the host computer (not shown) by way of ATAPI/SCSI interface 15.

In addition, in the case where the decoded data are musical ones, the data output from CD decoder 7 are input to a D/A converter 16 and output as audio signals.

During the period of information recording, the data transmitted from the host computer by way of ATAPI/ SCSI interface 15 are instructed by the buffer manager 13 to be stored once in the buffer RAM 12.

Although write of record process is initiated after the amount of data stored in the buffer RAM 12 reaches a predetermined amount, a beam spot of the laser light LB in advance has to be brought to an intended starting location on the recording disc 1. This location is determined based on wobble signals which are recorded as track wobbling in advance in the recording disc 1. The information on absolute time called ATIP (absolute time in pre-groove) is included in the wobble signals and retrieved by the ATIP decoder 8.

In addition, synchronizing signals generated by the ATIP decoder 8 are input to CD encoder 10 and serve to enable data recording into the precise location on the recording disc 1.

After being subjected to affixing error correction codes and interleave processing in CD-ROM encoder 11 or CD encoder 10, the data in the buffer RAM 12 are recorded in the recording disc 1 by the laser controller 9 and optical pickup 3.

Incidentally, the EF-modulated data operate to drive the laser source at a channel bit rate of 4.3218 Mbps (standard speed) for the bit stream. The recorded data in this case are designed to constitute an EFM frame by 588 channel bits as a unit.

FIG. 2 is a diagrammatical block diagram illustrating an information processing system incorporating the optical disc apparatus 23 of FIG. 1 according to one embodiment of the invention.

The information processing system 100 includes
an input section 20 provided with a keyboard, a mouse and other similar inputting devices;
an output section 22 with a CRT, a LCD and other similar display devices;
the optical disc apparatus 23 of FIG. 1; and
a control section for assuming the overall control of the processing system 100.

FIG. 3 is a top view illustrating a hybrid optical disc of the invention. The hybrid optical disc 100 is provided with two areas, one a read-only memory (ROM) area 40 having application software and data stamped therein in advance, and the other a recordable RAM area 41.

FIG. 4 includes a flowchart illustrating a process flow of a prevention technique against unauthorized use of hybrid optical discs according to one embodiment of the present invention.

First in the process an inquiry is made regarding a coming operation is a recording (writing) process or a reading (playback) process (S2). If the response to the inquiry in the step S2 is found a reading process (S3), a further inquiry is made regarding whether a present disc is legitimate or not (S4). If the response to the inquiry in the step S4 is affirmative indicating that the disc is legitimate, the process proceeds to step S5 where reading process is performed.

In the case where the response to the inquiry in the step S2 is also found a recording process (S1), an inquiry is made regarding whether the present disc is legitimate or not (S4). If the response to the inquiry in the step S4 is affirmative indicating that the disc is legitimate, the process proceeds to step S5 where reading process is performed.

As described earlier, the techniques as prevention measures have been proposed to prevent unauthorized or illegal copying recording discs and the use of illegally copied media such as CD-ROM recording discs. However, the techniques are implemented only during data read process as shown in FIG. 9.

In contrast, there performed in the present embodiment is to examine whether the disc in use at present is legitimate not only during information reading process but also during recording process, whereby an optical disc apparatus is provided with the capability of more credibly preventing unauthorized use of hybrid optical discs.

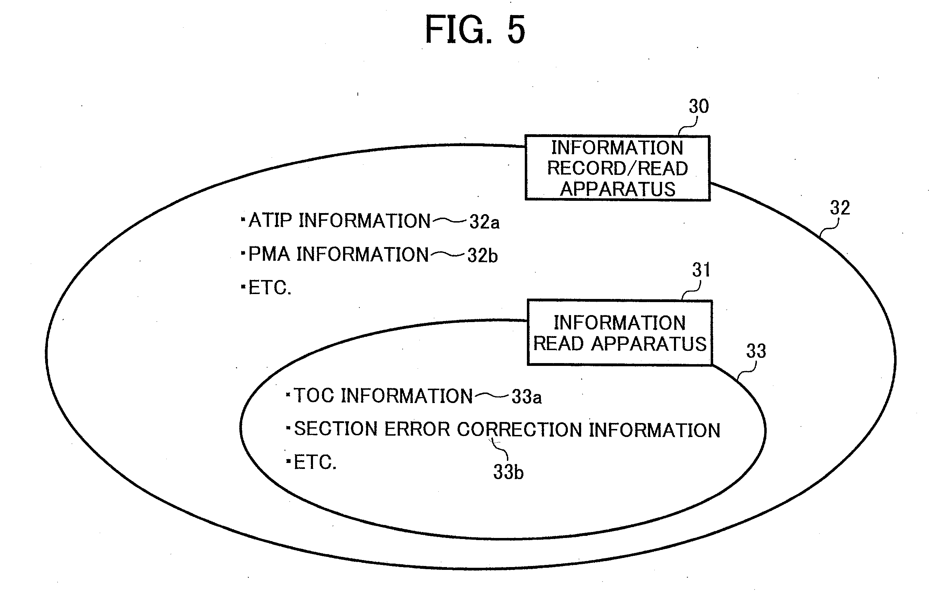

FIG. 5 is a drawing diagrammatically illustrating the relationship between several pieces of information retrievable from a hybrid optical disc.

The information, which can be acquired by the information read/record apparatus 30 in the case provided with the recording capability, includes ATIP information 32a, PMA (program memory area) information 32b and so on.

As the parts of the ATIP information, there included are the maximum recording time available for the media currently in use, recording speed, and appropriate recording laser power each corresponding to the media. In addition, as the parts of the PMA information, the data called Disc ID are included.

These pieces of information in general cannot be acquired by the information read apparatus 31. As the pieces of information acquired by the information read apparatus 31, there included are TOC (table of contents) information 33a and error correction information 33b which is suitably set corresponding to respective sectors for the media.

By utilizing these pieces of information in combination, more powerful and effective techniques can be achieved for preventing illegal use of the hybrid discs.

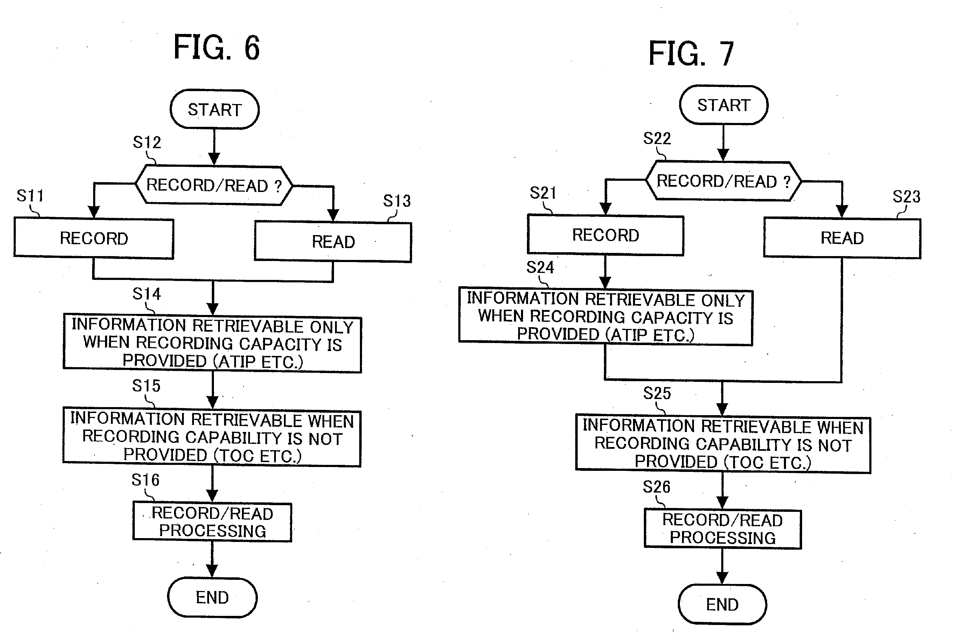

FIG. 6 includes a flowchart illustrating a process flow of a prevention technique against unauthorized use of hybrid discs according to an alternate embodiment of the present invention.

An inquiry is made regarding a coming operation is a recording or a reading process (S12). If the response to the inquiry in the step S12 is found a reading process (S13), the determination is firstly performed (S14) on the information which is retrievable only when the recording capability is provided (ATIP information 32a, PMA information 32b and so on), and secondly, a further determination is performed (S15) on the information which is retrievable when the recording capability is not provided (TOC information 33a and error correction information 33b, which is suitably set corresponding to respective sectors for the media, and so on). If both sets of the information are determined true, the reading process is performed (S16).

In the case where the response to the inquiry also in the step S12 is found a recording process (S11), the above noted operations of S14 and S15 are performed. Subsequently, if both sets of the information are determined true, the recording process is performed (S16).

The reasons for performing the above mentioned two-fold operations are as follows. For the optical media having a read area 40 and a record area 41, an apparatus suitably in use for information reading is required to be provided with information reading capability, while an apparatus suitably in use for information recording is required to be provided with recording capability.

In this context, since the information read/record apparatus 30 is provided simultaneously with both reading and recording capabilities, this apparatus 30 is likely to receive more recording media than the information read apparatus 31.

Accordingly, in the case of hybrid optical discs utilizing the read/record apparatus 30, it is intended in the present invention that the hybrid disc presently in use is examined in a proper manner, in that the information retrievable characteristically for each of the reading and recording processes are examined, and that the hybrid optical disc can be determined as a legitimate one when both sets of the information are determined true.

FIG. 7 includes a flowchart illustrating a process flow of a prevention technique against unauthorized use of hybrid optical discs according to another embodiment of the present invention.

An inquiry is made regarding a coming operation is a recording or a reading process (S22). If the response to the inquiry in the step S22 is found a reading process (S23), the determination is performed (S24) first on the information which is retrievable when the recording capability is not provided (TOC information 33a and error correction information 33b and so on), and a further determination is performed secondly on the information which is retrievable when the recording capability is not provided (TOC information 33a and error correction information 33b, which is suitably set corresponding to respective sectors, and so on), and then the reading process is performed (S26) if the present information is found true.

In the case where the response to the inquiry also in the step S22 is found a recording process (S21), the determination is performed (S24) on the information which is retrievable when the recording capability is provided (ATIP information 32a, PMA information 32b and so on), and then the recording process is performed (S26) if the present information is found true.

The reasons for performing the specific operations in the present embodiment are as follows. When the method of the determination of FIG. 6 is always performed, in which the information retrievable characteristically for each of the reading and recording processes are examined, and which the information retrievable characteristically for each of the reading and recording processes is examined, there necessarily gives rise to an increase in time required for the processing.

Accordingly, it is intended in the present embodiment the determination in the case of the reading process is made by examining the information which can be retrieved characteristically for the reading process, while the determination in the case of the recording process is made by examining the information retrievable characteristically for each of the reading and recording processes and by determining the hybrid disc as a legitimate one when both sets of the thus acquired information are determined true.

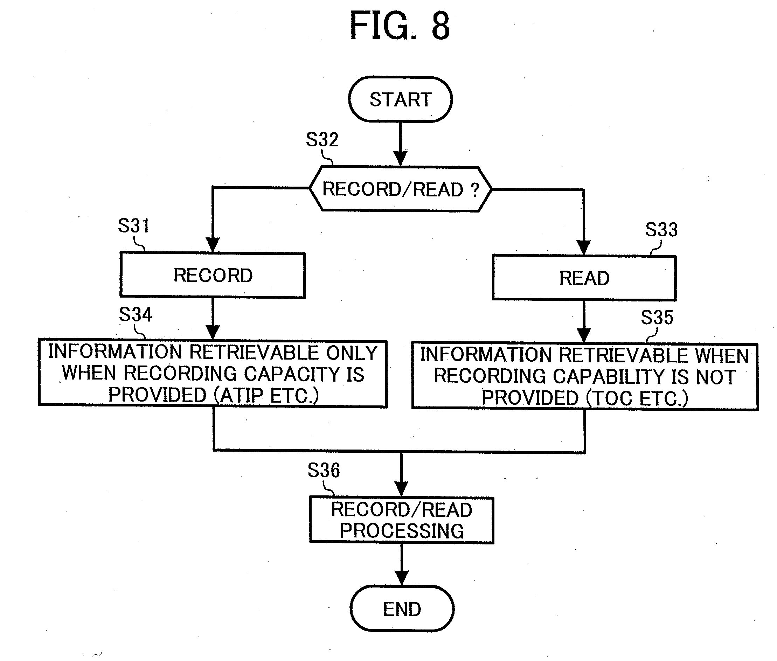

FIG. 8 includes a flowchart illustrating a process flow of a prevention technique against unauthorized use of hybrid optical discs according to still another embodiment of the present invention.

An inquiry is made regarding a coming operation is a recording or a reading process (S32). If the response to the inquiry in the step S32 is found a reading process (S33), the determination is performed (S35) on the information which is retrievable when the recording capability is not provided (TOC information 33a and error correction information 33b, which is suitably set corresponding to respective sectors for the media, and so on), and then the reading process is performed (S36) if the present information is found true.

In the case where the response to the inquiry also in the step S32 is found a recording process (S31), the determination is performed (S24) on the information which is retrievable when the recording capability is provided (ATIP information 32a, PMA information 32b and so on), and then the recording process is performed (S36) if the present information is found true.

In the present embodiment illustrated in FIG. 7, therefore, the method of the determination is characterized in the recording process by utilizing only the information which is retrievable when the recording capability is provided.

The process steps included in the flow charts of these embodiments are implemented by the CPU in the system host through instructing the optical recording disc apparatus 23 according to the program of the present invention, which is stored in advance in ROM 17 and subsequently loaded in the CPU.

It is apparent from the above description including the examples the optical disc apparatus disclosed herein above can offer several advantages over previously known similar apparatuses for preventing an unauthorized use of a hybrid optical disc.

For example, several techniques as prevention measures for primarily CD-ROM media have already been proposed to prevent unauthorized copying of recording discs and the use of illegally copied discs. These techniques are commonly performed only during data read process. In addition, a hybrid optical disc has been developed recently in the field of compact discs, which is provided with a ROM area and a recordable area. And, it has been proposed for the hybrid optical disc to be distributed with contents suitably recorded in advance as a substitute for the CD-ROM.

In contrast to CD-ROM which is formed only for reading information, the hybrid optical disc is adapted to recording as well as reading. According to one aspect of the present invention, the hybrid disc is examined whether it is legitimate not only during reading process but also only during information recording process, which enables the more credible prevention feasible of the unauthorized use of hybrid optical discs.

In another aspect, the prevention means provided in the present invention is configured to determine that a hybrid disc is legitimate if the result of determination on the hybrid disc obtained from both the read information determination means and the record information determination means is found legitimate.

By considering the common trend that the information record apparatus is likely to receive more recording media hence more information than the information read apparatus and by implementing the above mentioned prevention means suitably utilizing the characteristic information retrievable each of the reading and recording processes, the more credible prevention becomes feasible of the unauthorized use of hybrid optical discs.

This method of prevention, however, may give rise to an increase in time required for the processing because each of the reading and recording processes is always implemented.

This can be obviated by the steps in another aspect of the invention, in which the determination in the case of the reading process is made by examining the information which can be retrieved characteristically for the reading process, while the determination in the case of the recording process is made by examining the information retrievable characteristically for each of the reading and recording processes and by determining the hybrid disc as a legitimate one when both sets of the thus acquired information are determined true.

As a result, the above noted increase in time required for the processing is obviated.

In addition, the increase in time is further alleviated in the recording process by the steps in still another aspect of the invention, which are performed by utilizing only the information which is retrievable when the recording capability is provided.

The advantages mentioned above are realized by appropriately implementing the steps disclosed herein above, which are reinforced by the methods, the computer program product for use with a control computer in the optical disc apparatus, and a program storage device readable by a machine to perform these steps of preventing unauthorized use of hybrid optical discs.

The process steps set forth in the present description on the configuration of, and the method of driving optical disc apparatus and information processing system may be implemented using conventional general purpose microprocessors, programmed according to the teachings in the present specification, as will be appreciated to those skilled in the relevant arts. Appropriate software coding can readily be prepared by skilled programmers based on the teachings of the present disclosure, as will also be apparent to those skilled in the relevant arts.

The present specification thus include also a computer-based product which may be hosted on a storage medium, and include instructions which can be used to program a microprocessor to perform a process in accordance with the present disclosure. This storage medium can include, but not limited to, any type of disc including floppy discs, optical discs, CD-ROMs, magneto-optical discs, ROMs, RAMs, EPROMs, EEPROMs, flash memory, magnetic or optical cards, or any type of media suitable for storing electronic instructions.

Additional modifications and variations of the present invention are possible in light of the above teachings. It is therefore to be understood that within the scope of the appended claims, the invention may be practiced other than as specifically described herein.

## Claims

1. An optical disc apparatus comprising
a prevention means for preventing an unauthorized use of a hybrid optical disc, said hybrid optical disc having a read-only memory (ROM) area and a recordable area,
said prevention means comprising
a reading process determination means for determining whether said hybrid optical disc is legitimate during a reading process of information recorded in said ROM area, wherein
whether said hybrid optical disc is legitimate is determined by said reading process determination means during a process of recording information in said hybrid optical disc as well as during said process of reading information.

2. An optical disc apparatus comprising
a prevention means for preventing an unauthorized use of a hybrid optical disc, said hybrid optical disc having a read-only memory (ROM) area and a recordable area,
said prevention means, during processes of reading information from, and recoding information into said hybrid optical disc, comprising
(a) a read information determination means for determining whether said hybrid optical disc is legitimate utilizing information that is retrievable when information recorded in advance in said ROM area is read and
(b) a record information determination means for determining whether said hybrid optical disc is legitimate utilizing information that is retrievable when information is recorded in said recordable area, wherein
said prevention means is configured to determine that said hybrid optical disc is legitimate if a result of determination on said hybrid optical disc obtained from both said read information determination means and said record information determination means is found legitimate.

3. The optical disc apparatus according to claim 2, wherein
said prevention means is configured to determine, when information recorded in advance in said ROM area is read, that said hybrid optical disc is legitimate if a result of determination on said hybrid optical disc obtained from said read information determination means is found legitimate, and wherein
said prevention means is configured to determine, when information is recorded in said recordable area, that said hybrid optical disc is legitimate if a result of determination on said hybrid optical disc obtained from both said read information determination means and said record information determination means is found legitimate.

4. The optical disc apparatus according to claim 2, wherein
said prevention means is configured to determine, when information recorded in advance in said ROM area is read, that said hybrid optical disc is legitimate if a result of determination on said hybrid optical disc obtained from said read information determination means is found legitimate, and wherein
said prevention means is configured to determine, when information is recorded in said recordable area, that said hybrid optical disc is legitimate if a result of determination on said hybrid optical disc obtained from said record information determination means is found legitimate.

5. A method for preventing an unauthorized use of a hybrid optical disc, said hybrid optical disc having a read-only memory (ROM) area and a recordable area, comprising the steps of:
providing a prevention means comprising a reading process determination means for determining whether said hybrid optical disc is legitimate during a reading process of information recorded in said ROM area; and
determining whether said hybrid optical disc is legitimate by said reading process determination means during a process of recording information in said hybrid optical disc as well as during a process of reading information.

6. A method for preventing an unauthorized use of a hybrid optical disc, said hybrid optical disc having a read-only memory (ROM) area and a recordable area, comprising the steps of:
providing a prevention means, during processes of reading information from, and recoding information into said hybrid optical disc, comprising
(a) a read information determination means for determining whether said hybrid optical disc is legitimate utilizing information that is retrievable when information recorded in advance in said ROM area is read and
(b) a record information determination means for determining whether said hybrid optical disc is legitimate utilizing information that is retrievable when information is recorded in said recordable area; and
determining that said hybrid optical disc is legitimate if a result of determination on said hybrid optical disc obtained from both said read information determination means and said record information determination means is found legitimate.

7. The method according to claim 6, wherein
said prevention means is configured to determine, when information recorded in advance in said ROM area is read, that said hybrid optical disc is legitimate if a result of determination on said hybrid optical disc obtained from said read information determination means is found legitimate, and wherein
said prevention means is configured to determine, when information is recorded in said recordable area, that said hybrid optical disc is legitimate if a result of determination on said hybrid optical disc obtained from both said read information determination means and said record information determination means is found legitimate.

8. The method according to claim 6, wherein
said prevention means is configured to determine, when information recorded in advance in said ROM area is read, that said hybrid optical disc is legitimate if a result of determination on said hybrid optical disc obtained from said read information determination means is found legitimate, and wherein
said prevention means is configured to determine, when information is recorded in said recordable area, that said hybrid optical disc is legitimate if a result of determination on said hybrid optical disc obtained from said record information determination means is found legitimate.

9. A computer program product for use with a control computer in an optical recording disc apparatus configured to have access to a hybrid optical disc, said hybrid optical disc having a read-only memory (ROM) area and a recordable area,
said computer program product comprising:
a computer usable medium having computer readable program code means embodied in said medium for causing the steps of preventing an unauthorized use of said hybrid optical disc recited in any one of claims 5 through 8.

10. A program storage device readable by a machine, tangibly embodying a program of instructions executable by the machine to perform the steps of preventing an unauthorized use of said hybrid optical disc recited in claim 9.
